(19) **Europäisches Patentamt European Patent Office Office européen des brevets**

(11) **EP 3 392 797 B1**

(12) **EUROPEAN PATENT SPECIFICATION**

(45) Date of publication and mention of the grant of the patent:
**28.07.2021 Bulletin 2021/30**

(51) Int Cl.:
**G06K 9/00** *(2006.01)* **G08G 1/09** *(2006.01)*

(21) Application number: **17167465.8**

(22) Date of filing: **21.04.2017**

(54) **DEVICE FOR DETERMINING VEHICLE NAVIGATION INFORMATION**

VORRICHTUNG ZUR FESTLEGUNG VON FAHRZEUGNAVIGATIONSINFORMATIONEN

DISPOSITIF DE DÉTERMINATION DES INFORMATIONS DE NAVIGATION D'UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.10.2018 Bulletin 2018/43**

(73) Proprietor: **Continental Automotive GmbH 30165 Hannover (DE)**

(72) Inventors:
• **Ponkumar, Senthil 560068 Bangalore (IN)**
• **Ramachandran, Radhika 683574 Ernakulam, Kerala (IN)**
• **Kiran, Madhu 560016 Bangalore (IN)**

(74) Representative: **Continental Corporation c/o Conti Temic microelectronic GmbH Intellectual Property Sieboldstraße 19 90411 Nürnberg (DE)**

(56) References cited:
**DE-A1-102010 027 364     DE-A1-102012 221 652**

• **ANDREAS MOGELMOSE ET AL: "Vision-Based Traffic Sign Detection and Analysis for Intelligent Driver Assistance Systems: Perspectives and Survey", IEEE TRANSACTIONS ON INTELLIGENT TRANSPORTATION SYSTEMS, IEEE, PISCATAWAY, NJ, USA, vol. 13, no. 4, 1 December 2012 (2012-12-01), pages 1484-1497, XP011474105, ISSN: 1524-9050, DOI: 10.1109/TITS.2012.2209421**

EP 3 392 797 B1

**Description**

FIELD OF THE INVENTION

The present invention relates to a device for determining vehicle navigation information, to a vehicle configured to determine vehicle navigation information, to a method for determining vehicle navigation information, as well as to a computer program element.

BACKGROUND OF THE INVENTION

The general background of this invention is the field of driving warning and information provision systems.
In different countries and regions of the world, vehicles drive on different sides of the road. For example, in the UK vehicles drive on the left, whilst in Europe vehicles drive on the right. A driver may however cross from one country or region to another, for example when travelling from France to the UK or vice versa, where there is a change relating to the side of the road that traffic uses. There are occasions when it can be necessary to automatically determine on what side of the road a vehicle should drive, without relying on GPS information.
DE 10 2010 027364 A1 discloses a system to determine whether the traffic drives on left or right side of the road based on the position of the traffic signs on the side of the road.
DE 10 2012 221652 A1 discloses a system to determine whether the traffic drives on left or right side of the road based on the road marking and traffic signs.
A. Mogelmose et al: "Vision-Based Traffic Sign Detection and Analysis for Intelligent Driver Assistance Systems: Perspectives and Survey", IEEE TRANSACTIONS ON INTELLIGENT TRANSPORTATION SYSTEMS, IEEE, PISCATAWAY, NJ, USA, vol. 13, no. 4, 2012, pages 1484-1497, DOI: 10.1109/TITS.2012.2209421, is a survey on traffic sign recognition.

SUMMARY OF THE INVENTION

It would be advantageous to have improved device for determining vehicle navigation information.
The object of the present invention is solved with the subject matter of the independent claims, wherein further embodiments are incorporated in the dependent claims. It should be noted that the following described aspects and examples of the invention apply also for the device for determining vehicle navigation information, the vehicle configured to determine vehicle navigation information, the method for determining vehicle navigation information, and for the computer program element.
In a first aspect, there is provided A device for determining vehicle navigation information, comprising:

- an input unit;
- a processing unit; and
- an output unit

The input unit is configured to provide the processing unit with an image relating to a scene external to a vehicle. The input unit is also configured to provide the processing unit with dictionary information. The dictionary information is generated on the basis of a plurality of images (imagery), and at least some of the image data of the plurality of images is image data associated with at least one road sign. The processing unit is configured to determine whether traffic, in a location where the image was acquired, drives on the right or left of roads in the direction of travel on the basis of image processing of the image and the dictionary information. The image processing comprises a determination of an areal position in the image, where image data at the areal position is associated with a road sign of the at least one sign. The image processing also comprises a determination of a spatial relationship between a first feature extracted from the image data at the areal position and a second feature extracted from the image data at the areal position. The first feature is extracted on the basis of at least one pixel value associated with a first colour and the second feature is extracted on the basis of at least one pixel value associated with a second colour. The output unit is configured to output driving information relating to whether traffic drives on the right or left.
In other words, a pictogram extraction or segmentation technique is used with respect to a road sign detected in acquired imagery, with that pictogram extraction/segmentation technique being combined with colour classification and in combination with library or dictionary information of road signs, a determination can be made as to on what side of the road traffic drives in the locality where the imagery was acquired.
In this way, a determination can be made on what side of the road a car should drive based directly on acquired imagery, for example when a car is driven from the continent to the UK or vice versa. Reliance on, for example input from a GPS system or direct input from the driver is not required, and this information can be used by other car systems, such as other functionalities of an Advanced Driver Assistance System (ADAS) thereby enabling that system to operated optimally. Thus, imagery from roads signs, for example no overtaking signs that have pictograms represented as mirror images to one another with respect to the UK and the European continent, can be used to determine on what side of the road traffic in that location drives - and this information can be used by, for example, other functionalities of an ADAS.

Thus dictionary information containing information relating to road signs that can be useable to determine on what side of the road the traffic drives, for example no overtaking signs, can be utilised along with acquired imagery of road signs in a locality to determine on what side of the road the traffic drives in that locality.

To put this another way, a new filter is provided that analyses imagery containing road sign imagery to determine on what side of the road traffic drives, providing a support function to improve the performance of country code estimation. Furthermore, this additional information based directly from road signs can be determined from normal imagery obtained from for example an ADAS system, and little additional processing overhead is required in order to derive the information relating to whether cars drive on the left or on the right.

In this manner, an icon can be displayed on an instrument cluster indicating to the driver of a vehicle on what side of the road they should drive, information can be provided to a lane assistance system to improve the traffic assist, information can be utilised to improve a wrong way assist system.

Thus, imagery can be acquired and image processing techniques are used to determine if and where road signs are present and then the imagery at that location can be processed and in comparison with the dictionary information a determination can be made if the road sign that has been acquired is a road sign that contains information that enables it to be established on what side of the road the traffic drives in that location. In other words, a road sign such as a no overtaking sign can be determined to be a no overtaking sign in acquired imagery, and as such a sign is different depending upon whether the traffic drives on the right or left, a determination can be acquired from imagery acquired as to what side of the road the traffic drives on at that location.

In an example, extraction of the first and second features comprises a histogram profiling technique.

In other words, two pictograms are extracted from imagery associated with a road sign based on a histogram profiling technique additionally utilising colour based classification, enabling these features to be analysed for traffic side estimation, also termed as the side of the road that traffic drives on in the direction of traffic.

In an example, extraction of the first and second features comprises edge detection.

This enables the two features to be extracted, which can also be termed extraction of a region of interest, and this region of interest is processed along with library information to determine whether a driver should drive on the right or on the left.

In an example, the edge detection comprises a determination of a horizontal profile within the image data at the areal position.

In an aspect the first colour is substantially red.

Thus pictogram imagery in road signs that is red can be differentiated from imagery in road signs that is represented in other colours, for example the white background or other features in the road sign represented in other colours.

In an aspect the second colour is substantially black or grey.

In this manner pictogram imagery in road signs that is black or grey can be differentiated from imagery in road signs that is represented in other colours, for example the white background or other features in the road sign represented in other colours. In an example, the black or grey pictogram imagery in a road sign can be differentiated specifically against red pictogram imagery in a road sign, enabling such imagery to be analysed to determine traffic side information.

In an aspect the road sign is a no overtaking sign.

In other words, there is a clear difference between the no overtaking signs in countries that drive on the left with respect to countries that drive on the right. For example, on the European continent the no overtaking sign is a circular sign with pictograms of two cars side by side, with the car on the left represented in red and the car on the right represented in black or dark grey, thus indicating by the red car that overtaking on the left is forbidden. In contrast, in for example the UK where the traffic drives on the left the no overtaking sign is a circular sign with pictograms of two cars side by side, with the car on the left represented in black or dark grey and the car on the right represented in red, thus indicating by the red car that overtaking on the right is forbidden. This clear difference, with the signs being in effect mirror images of one another, are used to determine on what side of the road traffic drives on the basis of an image acquired of a no overtaking sign acquired in that locality.

In an aspect, the determination is made that traffic drives on the left when the first feature is determined to be spatially positioned to the right of the second feature.

In an aspect, the determination is made that traffic drives on the right when the first feature is determined to be spatially positioned to the left of the second feature.

In an example, the processing unit is configured to add the image to the plurality of images.

In this manner, the dictionary information can be continually improved as imagery is acquired.

In a second aspect, there is provided a vehicle configured to determine vehicle navigation information, comprising:

- at least one data acquisition unit; and
- a device for determining the presence of a road sign according to the first aspect.

The at least one image acquisition unit comprises a camera configured to acquire the image.
In a third aspect, there is provided a method for determining vehicle navigation information, comprising:

a) providing an image relating to a scene external to a vehicle;
c) providing dictionary information, wherein the dictionary information is generated on the basis of a plurality of images, and wherein at least some of the image data of the plurality of images is image data associated with at least one road sign;
d) determining whether traffic, in a location where the image was acquired, drives on the right or left of roads in the direction of travel on the basis of image processing of the image and the dictionary information; wherein the image processing comprises:

d1) determining an areal position in the image, where image data at the areal position is associated with a road sign of the at least one sign;
d2) determining a spatial relationship between a first feature extracted from the image data at the areal position and a second feature extracted from the image data at the areal position, wherein the first feature is extracted on the basis of at least one pixel value associated with a first colour and the second feature is extracted on the basis of at least one pixel value associated with a second colour; and the method further comprises:
e) outputting driving information relating to whether traffic drives on the right or left.

According to another aspect, there is provided a computer program element controlling apparatus as previously described which, in the computer program element is executed by processing unit, is adapted to perform the method steps as previously described.
There is also provided a computer readable medium having stored the computer element as previously described.
Advantageously, the benefits provided by any of the above aspects equally apply to all of the other aspects and vice versa.
The above aspects and examples will become apparent from and be elucidated with reference to the embodiments described hereinafter.

BRIEF DESCRIPTION OF THE DRAWINGS

Exemplary embodiments will be described in the following with reference to the following drawings:

Fig. 1 shows a schematic set up of an example of a device for determining vehicle navigation information;
Fig. 2 shows a schematic set up of an example of a vehicle configured to determine vehicle navigation information;
Fig. 3 shows a method for determining vehicle navigation information; and
Fig. 4 shows an example of a detailed workflow for determining vehicle navigation information; and
Fig. 5 shows an example of road signs useable by the device, vehicle and method in determining vehicle navigation information.

DETAILED DESCRIPTION OF EMBODIMENTS

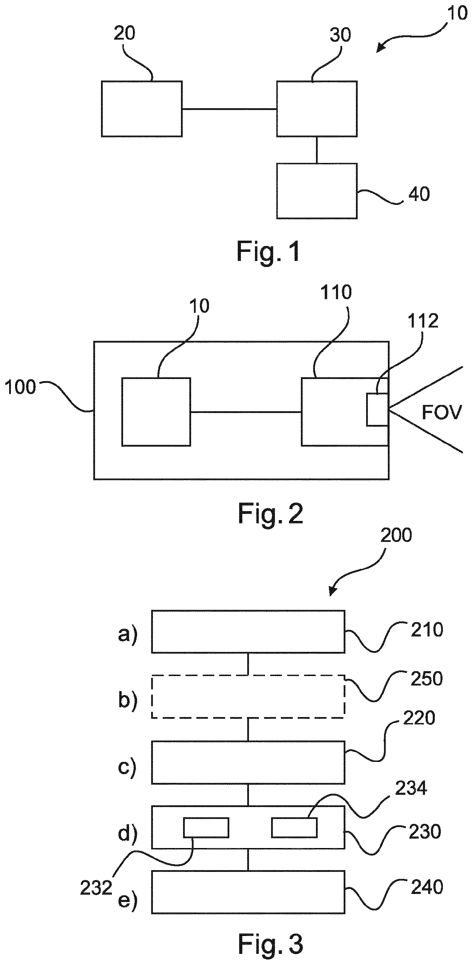

Fig. 1 shows an example of a device 10 for determining vehicle navigation information. The device 10 comprises an input unit 20, a processing unit 30, and an output unit 40. The input unit 20 is configured to provide the processing unit 30 with an image relating to a scene external to a vehicle. This can be via wired or wireless communication. The input unit 20 is also configured to provide the processing unit 30 with dictionary information, which can be via wired or wireless communication. The dictionary information is generated on the basis of a plurality of images. At least some of the image data of the plurality of images is image data associated with at least one road sign. The processing unit 30 is configured to determine whether traffic, in a location where the image was acquired, drives on the right or left of roads in the direction of travel on the basis of image processing of the image and the dictionary information. The image processing comprises a determination of an areal position in the image, where image data at the areal position is associated with a road sign of the at least one sign. The image processing also comprises a determination of a spatial relationship between a first feature extracted from the image data at the areal position and a second feature extracted from the image data at the areal position. The first feature is extracted on the basis of at least one pixel value associated with a first colour and the second feature is extracted on the basis of at least one pixel value associated with a second colour. The output unit 40 is configured to output driving information relating to whether traffic drives on the right or left.

In an example, road signs are passive signs and in another example road signs are active signs, such as those using LED lighting.

According to an example, extraction of the first and second features comprises a histogram profiling technique.

According to an example, extraction of the first and second features comprises edge detection.

According to an example, the edge detection comprises a determination of a horizontal profile within the image data at the areal position.

In an example, the edge detection comprises determining a horizontal profile within the image data at the areal position (the road sign in the imagery) at the centre of the areal position, and thus with respect to two features (pictograms) that are side to side, clearly defined edges can be determined at the intersection of the horizontal profile with the two pictograms.

According to an aspect, the first colour is substantially red.

According to an aspect, the second colour is substantially black or grey.

According to an aspect, the road sign is a no overtaking sign.

In an example, the plurality of images used to generate the dictionary information comprises imagery of no overtaking signs from the UK and the European continent. This imagery, can be associated with a determination as to what that sign represents, for example as determined by a technician, and in this way "Ground Truth" information can be used in generating the dictionary information. Similarly, other imagery of the plurality of images can have other road signs different to no overtaking signs, with again an associated human based determination as to what that sign represents, again forming such Ground Truth information useable in generating the dictionary information.

In other words, data has been pipelined using Ground Truth data for feature extraction and classifier training to make a dictionary utilizing the data from countries following both right and left hand drive. The same dictionary will then be used during the real time processing to differentiate Right Vs Left hand drive.

According to an aspect, the determination is made that traffic drives on the left when the first feature is determined to be spatially positioned to the right of the second feature.

According to an aspect, the determination is made that traffic drives on the right when the first feature is determined to be spatially positioned to the left of the second feature.

According to an example, the processing unit is configured to add the image to the plurality of images.

Fig. 2 shows an example of a vehicle 100 configured to determine vehicle navigation information. The vehicle 100 comprises at least one data acquisition unit 110, and a device 10 for determining the presence of a road sign as described with reference to Fig. 1. The at least one image acquisition unit 110 comprises a camera 112 configured to acquire the image.

In an example, the at least one image acquisition unit is configured to acquire the plurality of images. In an example, the dictionary information is downloaded to the vehicle. Thus, dictionary training/update can be done offline and the vehicle can be provided with new and improved dictionary information if and when necessary.

In an example, the camera is configured to acquire the plurality of images.

Fig. 3 shows a method 200 for determining vehicle navigation information in its basic steps. The method 200 comprises:

in a providing step 210, also referred to as step a), providing an image relating to a scene external to a vehicle;
in a providing step 220, also referred to as step c), providing dictionary information, wherein the dictionary information is generated on the basis of a plurality of images, and wherein at least some of the image data of the plurality of images is image data associated with at least one road sign;
in a determining step 230, also referred to as step d), determining whether traffic, in a location where the image was acquired, drives on the right or left of roads in the direction of travel on the basis of image processing of the image and the dictionary information; wherein the image processing comprises:

in a determining step 232, also referred to as step d1), determining an areal position in the image, where image data at the areal position is associated with a road sign of the at least one sign;
in a determining step 234, also referred to as step d2), determining a spatial relationship between a first feature extracted from the image data at the areal position and a second feature extracted from the image data at the areal position, wherein the first feature is extracted on the basis of at least one pixel value associated with a first colour and the second feature is extracted on the basis of at least one pixel value associated with a second colour; and the method further comprises:

in an outputting step 240, also referred to as step e), outputting driving information relating to whether traffic drives on the right or left.

In an example, step a) comprises providing the image from an input unit to a processing unit.

In an example, step c) comprises providing the dictionary information from the input unit to the processing unit.

In an example, in step d) the processing is carried out by the processing unit.

In an example, in step e) the outputting is carried out by an output unit.

In an example, the method comprises step b), generating 250 the dictionary information on the basis of the plurality of images. In other words, already provided dictionary information can be utilised, that was acquired offline, or the method can generate the dictionary information.

In an example, step d2) comprises utilising a histogram profiling technique.

In an example, step d) comprises utilising edge detection.

In an example, edge detection comprises a determination of a horizontal profile within the image data at the areal position.

In an aspect, the first colour is substantially red.

In an aspect, the second colour is substantially black or grey.

In an aspect, the road sign is a no overtaking sign.

In an aspect, the determination is made that traffic drives on the left when the first feature is determined to be spatially positioned to the right of the second feature.

In an aspect, the determination is made that traffic drives on the right when the first feature is determined to be spatially positioned to the left of the second feature.

In an example, the processing unit is configured to add the image to the plurality of images.

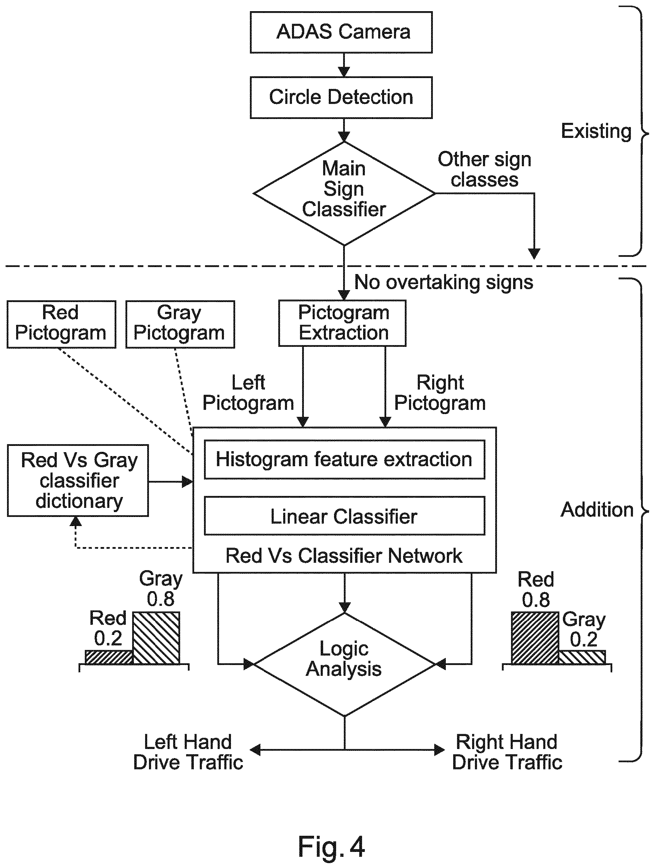

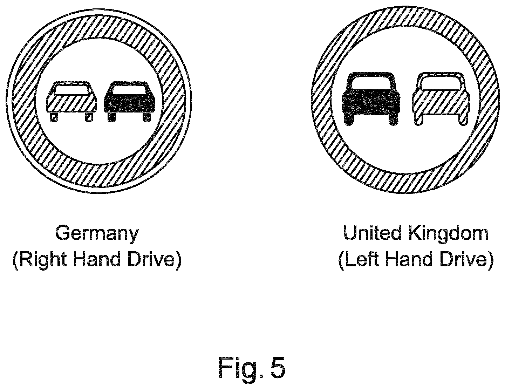

The device, vehicle and method are now described in further detail with respect to Figs. 4 and 5.

Fig. 4 shows a detailed work flow for determining vehicle navigation information, where a road sign is detected and pictograms in the sign are analysed along with classifier dictionary information to determine on what side of the road vehicles travel at the location where the road sign imagery was acquired. Thus, it can for example be determined if a car is driving in the UK or in Germany/France and this information be used to prompt the drive as to which side of the road they should drive and be used to inform relevant parts of an ADAS system regarding on what side of the road the traffic uses, such as automatic lane assist. In Fig. 4, in order place into context how a road sign is analysed in order to determine this information, the top half of the figure relates to an existing system for the detection and classification of a road sign recognition system. Then, in the bottom half of the figure, the new parts of the system that augment the previous system in order to provide the information relating to what side of the road the traffic uses is presented. In the discussion below, the whole system as shown in Fig. 4 is described thereby enabling the new part of that system to be put into context.

Referring to Fig. 4, one or more cameras acquires images of a scene outside a vehicle, as would normally be acquired by a camera forming part of an advanced driver assist system (ADAS) . The imagery can be acquired by such a camera, but can also be acquired by other cameras that need not to be associated with the vehicle, for example handheld cameras that form part of library imagery. The camera imagery contains object information such as a road scene, including different road signs, different lighting scenes and sources, road signs being illuminated by light sources such that light is being reflected from them, and road signs that are not being illuminated. The camera imagery contains imagery of streetlights, the headlights and taillights of cars, the sun in different parts of the imagery, and various other possible light sources in different parts of the imagery. The camera imagery contain imagery of road signs in countries where traffic drives on the left, for example in the UK, and imagery of road signs where the traffic drives on the right, for example in Germany.

With continued reference to Fig.4 camera imagery also relates to real-time imagery acquired by an on-board vehicle camera, which is used to determine the presence of a road sign, and which is then analysed to determine if the traffic where that image was acquired drives on the left or on the right hand side of the road. Appropriate warning information can then be provided to the driver, and the ADAS system can make use of this information in order that systems such as lane assist can operate optimally.

Before the device and method is run in real-time on a vehicle, utilising the workflow as shown in Fig. 4, training is undertaken using the above described camera imagery. In such off-line training, camera imagery is divided into one third evaluation data and two thirds development data. This is just one example, and different ratios of evaluation to development data can be utilised. Indeed, the evaluation data is used to determine the efficacy of the device, and method once training has been undertaken using the development data and need not actually be used.

Continuing with the off-line training phase, the development data training samples are generated based on the ground truth information (such as exactly what is visible in the camera imagery, as determined for example by a technician) along with overlapping ratio. Therefore, the detection and classification system running off-line on the development data set is provided with recognition information for road signs such as no overtaking signs in the UK and in mainland Europe, that are mirror images of each other as shown in Fig. 5. This means that the signs that can be used to indicate the traffic side information, i.e. no overtaking signs, can be acquired and analyzed and differentiated from other signs that cannot provide this information and differentiated from other image features such as street lamps etc. In other words, the development data has been pipelined using ground truth data for feature extraction and classifier training to make the dictionary utilizing the data from countries that follow right hand driving and from countries that follow left hand driving. That same dictionary is then used during real-time processing to determine the presence, and classification of, road signs, enabling a determination to be made of the aide of the road that traffic drives on at that location.

As shown in Fig. 4 in both the off-line training and an online real time processing, shape detection and circle sign classification is implemented, which as discussed above is utilised with ground truth for off-line training. A circular sign is detected and classified according to an aspect of the invention. The camera imagery is processed with image processing algorithms to detect a circular shape, or substantially circular shape indicative of a circular road sign viewed from an angle, and the image data within the boundary of that circular shape is captured according to an aspect of the invention. A circle sign classification step may utilise a principle component analysis (PCA) classifier to determine if a feature in the camera imagery is consistent with being a road sign, such as a no overtaking sign.

Following a determination that image data has been classified as a valid class of road sign, what could be termed an "After Burner module" carries out post processing analysis for the classified valid sign classes based on colour features extracted from defined areas (Region of Interest). Pictogram segmentation is used and colour classification is applied for those segmented pictograms to identify the color variation in the location of the classified signs and use this information for traffic side estimation according to an aspect of the invention. Thus, a no overtaking sign that is a UK sign can be determined, and similarly a no overtaking sign that is a DE/FR sign can be determined. From this, it can clearly be determined whether the vehicle is driving on a UK road or a German/French/Belgium road for example.

The following provides further detail on elements utilized in determining the presence of a road sign, and determining from that road sign traffic side information:

### Circle Detector

The Circle detector has 2 main parts - Course Detector and Detection Verification

### 1. Course Detector

The primary detection of the circles in the images is performed on an image sub-scaled by the factor of two. The following steps are performed in course detection stage.

**Edge Detection:** For Edge detection a well known Sobel filter is used in this system since it provides good performance in speed as well as detection rate. To ease the computational cost in later steps of the algorithm and to better define the position of the edges a non-maximum suppression scheme is used.

**Hough Accumulator:** The main detection step is established by the use of the fast generalized Hough Transform. To reduce memory consumption and computation time the radius range and centre positions to be scanned is quantized

**Low pass filter on Accumulator and Maximum Extraction:** In this step the highest entries of the accumulator image are extracted and entered into a list structure. A low pass filter is used on the accumulator images and a fixed number of maxima extracted and passed on to the next step. The list of points is submitted to a connected components search. The weighted centre of the connected components comprises the candidates handed on to the detection verification stage.

### 2. Detection Verification:

The circle candidates detected in the previous steps are quantized to two pixels accuracy in position and to a limited number of radius range segments in size. For later tracking and classification the circles have to be measured more accurately. As an additional effect this step verifies the circle candidates. Since through the rough estimation in the coarse detector phantom candidates are created, especially in areas containing many edges, tree branches or bushes for example. These phantom candidates are eliminated in this step. Chamfer matching algorithm is used for this process. The algorithm is based on a distance transform in which the value of each pixel in the transformed image represents the distance to the closest pixel set in the binary input image, in this case the edge image. The output is the sum of accumulated values under a mask applied to the distance transformed image, the so-called Chamfer image.

### Sign Tracker:

The tracker is the central component in the system. It is used to collect the traffic sign candidates in the image sequence from the detector, accumulate the detected circles over time and position and hand the tracks over to the classification system, administrating the classification results as well. The type of tracker used is an $\alpha\beta\gamma$ tracker.

**Classifier:**

Prior to classification, a Normalization process is performed on the image cutout to remove as many systematic differences (like their size, brightness, and grade of blurring) as possible between the patterns to be recognized.

The exemplar classifier implemented is a two stage hierarchical classifier. The first stage is used to reject the main part of the patterns not representing a sign and has the second function of determining the type of the sign. For the classification of one stage in the hierarchy the number of features resented to the classifier has to be reduced, and in this example this is done using the principal component analysis (PCA). The dimensionality of the classification problem is reduced to allow an efficient training of the classifier. For the classification process, polynomial classifier of second degree is being used due to its good classification performance, computational speed.

**Track Classification:**

The last step in the classification process is the combination of the single pattern classification results to a conclusion for the whole track, meaning to conclude from a sequence of image objects which class the corresponding real world object belongs to. The accumulated result is the weighted sum of these probabilities, the decision being made by the maximum relative probability. The relative probability has to be above a threshold, otherwise the classification is rejected and set to the result class "Garbage". An additional rejection step has been introduced by thresholding the sum of single probabilities for the resulting class. This addresses the issue that since the relative probability compared to the other classes may be high, but the absolute sum might still be low when the track was short or many of the entries could not be identified due to the being rejected by the single pattern classification system.

**Pictogram Extraction:**

The pictogram extraction module extracts the two pictograms from the No overtaking cutouts according to an aspect of the invention, for example based on histogram profiling techniques, since the red and black vehicle pictograms are clearly separable against the white background - see Fig. 5. If a horizontal profile is taken along the center of the cutout, clear edges at the vehicle pictograms are obtained. This data is utilized to extract the region of interest which is used for further processing.

**Red feature extraction - ROIs based features**

Redness check is done on the features extracted from YUV Image to represent the density of the color/s. Features used are for example. maximum; mean, ratio; and variance values of Y, U, V images. These features are later fed to a polynomial classifier to classify red or not red and compute the confidence score. A redness feature vector is generated based on the following equation,

$$\left[ Y_{max} \quad U_{max} \quad V_{max} \quad \frac{1}{n}\sum Y \quad \frac{1}{n}\sum U \quad \frac{1}{n}\sum V \quad \frac{1}{n-1}\sum(Y - Y_{mean})^2 \quad \frac{1}{n-1}\sum(U - U_{mean})^2 \quad \frac{1}{n-1}\sum(V - V_{mean})^2 \quad \frac{\frac{\max(V)}{n}}{\frac{\max(U)}{n}} \quad \frac{\frac{\max(V)}{n}}{\frac{\max(Y)}{n}} \right]$$

**Red Vs Gray Classifier Dictionary:**

The dictionary is generated from the road sign information, including the No Overtaking sign data, available in the data base. The database is divided into 1/3rd as evaluation data and 2/3rd as development data. Using the development data set and the ground truth information available, a color classifier dictionary is trained which can then distinguish Red colour vs Grey colour contained in the pictogram. This training is an offline process which utilizes colour features as a feature vector along with Polynomial Classifier for generating the classifier dictionary, which is strong enough to classify red pictogram and gray pictogram to identify the traffic side (i.e. is the traffic driving on the left or right).

**Red vs Gray Classifier Network:**

The Red vs gray classifier network has two components:

### 1. Histogram Feature Extraction:

A distinctive attribute or aspect is called a feature in image processing. Feature extraction is the process of segmenting out these attributes from the image. In the current scenario the distinguishing feature is the colour/gray level of the vehicle pictograms. A histogram gives the representation of colours or gray levels in an image. For digital images, a colour histogram represents the number of pixels that have colours in each of a fixed list of colour ranges that span the image's colour space; the set of all possible colors. So this module extracts the gray level histogram features of the pictograms for classification.

### 2. Linear Classifier

In the field of machine learning, the goal of statistical classification is to use an object's characteristics to identify which class (or group) it belongs to. A linear classifier achieves this by making a classification decision based on the value of a linear combination of the characteristics. An object's characteristics are also known as feature values and are typically presented to the machine in a vector called a feature vector. This module uses the linear combination of extracted histogram features along with the dictionary information to classify each of the vehicle pictograms to identify which pictogram has prominent red features and which has prominent gray features.

### Logic Analysis:

The final decision is made based on the placement of Red and Gray pictograms - see Fig. 5. For a right hand drive country like Germany, for a no overtaking sign the red pictogram will be on the left side and vice versa for a UK sign according to an aspect of the invention. The logic analysis module analyses the output of the classifier to conclude the drive side based on the above logic.

The following relates to the determination of road side information from both passive and active signs:
There are primarily two categories of road signs: Passive signs; and Active signs. For No Overtaking signs, these two types of signs have different appearances, with the difference being the color of vehicle pictograms and the background colors within the circle of the sign. Passive signs have red and black pictograms with a white background, whereas active signs, which are LED signs, have Red and White pictograms with a black background. The above described system has the capability to detect and recognize both types of signs, since colour classifiers are trained for these variations by extracting appropriate features from ROIs. Therefore, the system is capable of estimating the traffic drive side irrespective of whether the sign is active or passive.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. A device (10) for determining vehicle navigation information, comprising:

   - an input unit (20);
   - a processing unit (30); and
   - an output unit (40);

   wherein, the input unit is configured to provide the processing unit with an image relating to a scene external to a vehicle;
   wherein, the input unit is configured to provide the processing unit with a classifier trained with dictionary information, wherein the dictionary information comprises imagery of no overtaking signs from at least one country that drives on the left hand side of the road and at least one country that drives on the right hand side of the road;
   wherein, the processing unit is configured to determine whether traffic, in a location where the image was acquired, drives on the right or left of roads in the direction of travel by applying image processing of the image;
   wherein, the processing unit is configured to:

   - detecting a circular shape or substantially circular shape indicative of a circular road sign viewed from an angle;
   - classifying the image data within the boundary of said circular shape as a no overtaking sign using the trained classifier;
   - extracting a black or grey pictogram and a red pictogram from the detected no overtaking sign in the image;
   - determining that the traffic drives on the right hand side if the red pictogram is on the left and that the traffic drives on the left hand side if the red pictogram is on the right; and wherein, the output unit is configured to output driving information relating to whether traffic drives on the right or left.

2. Device according to claim 1, wherein extracting a black or grey pictogram and a red pictogram comprises a histogram profiling technique.

3. Device according to any of claims 1 or 2, wherein extracting a black or grey pictogram and a red pictogram comprises edge detection.

4. Device according to claim 3, wherein the edge detection comprises a determination of a horizontal profile within the image data.

5. Device according to claim 1, wherein the imagery used to generate the dictionary information comprises imagery of no overtaking signs from the UK and the European continent.

6. Device according to any of claims 1-5, wherein the processing unit is configured to add the image to the imagery.

7. A vehicle (100) configured to determine vehicle navigation information, comprising:

   - at least one data acquisition unit (110); and
   - a device (10) for determining the presence of a road sign according to any of the preceding claims; and

   wherein, the at least one image acquisition unit comprises a camera (112) configured to acquire the image.

8. A method (200) for determining vehicle navigation information, comprising:

   a) providing (210) an image relating to a scene external to a vehicle;
   c) providing (220) a classifier trained with dictionary information, wherein the dictionary information comprises imagery of no overtaking signs from at least one country that drives on the left hand side of the road and at least one country that drives on the right hand side of the road;
   d) determining (230) whether traffic, in a location where the image was acquired, drives on the right or left of roads in the direction of travel by applying image processing of the image; wherein the image processing comprises:

- detecting a circular shape or substantially circular shape indicative of a circular road sign viewed from an angle;
- classifying the image data within the boundary of said circular shape as a no overtaking sign using the trained classifier;
- extracting a black or grey pictogram and a red pictogram from the detected no overtaking sign in the image;

- determining that the traffic drives on the right hand side if the red pictogram is on the left and that the traffic drives on the left hand side if the red pictogram is on the right e)
outputting (240) driving information relating to whether traffic drives on the right or left.

9. A computer program element for controlling a device according to any one of claims 1 to 6 and/or a system according to claim 7, which when executed by a processor is configured to carry out the method of claim 8.


**Patentansprüche**

1. Vorrichtung (10) zum Bestimmen von Fahrzeugnavigationsinformation, die aufweist:

- eine Eingabeeinheit (20);
- eine Verarbeitungseinheit (30); und
- eine Ausgabeeinheit (40);

wobei die Eingabeeinheit zum Bereitstellen eines Bilds, das eine Szene außerhalb eines Fahrzeugs betrifft, an die Verarbeitungseinheit ausgebildet ist;
wobei die Eingabeeinheit zum Bereitstellen eines Klassifikators, der mit Dictionary-Information trainiert ist, an die Verarbeitungseinheit ausgebildet ist, wobei die Dictionary-Information bildliche Darstellungen von Überholverbotszeichen aus mindestens einem Land, in dem auf der linken Straßenseite gefahren wird, und mindestens einem Land, in dem auf der rechten Straßenseite gefahren wird, umfasst;
wobei die Verarbeitungseinheit zum Bestimmen, ob Verkehr an einem Ort, an dem das Bild erfasst wurde, auf der rechten oder linken Seite der Straßen in Fahrtrichtung fährt, durch Anwenden einer Bildverarbeitung des Bilds ausgebildet ist,
wobei die Verarbeitungseinheit ausgebildet ist zum:

- Detektieren einer kreisrunden Form oder im Wesentlichen kreisrunden Form, die auf ein kreisrundes Verkehrszeichen hinweist, das unter einem Winkel gesehen wird;
- Klassifizieren der Bilddaten innerhalb der Begrenzung der kreisrunden Form als ein Überholverbotszeichen unter Verwendung des trainierten Klassifikators;
- Extrahieren eines schwarzen oder grauen Piktogramms und eines roten Piktogramms aus dem detektierten Überholverbotszeichen in dem Bild;
- Bestimmen, dass der Verkehr auf der rechten Seite fährt, wenn sich das rote Piktogramm links befindet, und dass der Verkehr auf der linken Seite fährt, wenn sich das rote Piktogramm rechts befindet; und

wobei die Ausgabeeinheit zum Ausgeben von Fahrtinformation ausgebildet ist, die betrifft, ob Verkehr rechts oder links fährt.

2. Vorrichtung nach Anspruch 1, wobei das Extrahieren eines schwarzen oder grauen Piktogramms und eines roten Piktogramms eine Histogrammprofilierungstechnik umfasst.

3. Vorrichtung nach einem der Ansprüche 1 oder 2, wobei das Extrahieren eines schwarzen oder grauen Piktogramms und eines roten Piktogramms Kantendetektion umfasst.

4. Vorrichtung nach Anspruch 3, wobei die Kantendetektion eine Bestimmung eines horizontalen Profils innerhalb der Bilddaten umfasst.

5. Vorrichtung nach Anspruch 1, wobei die bildlichen Darstellungen, die zum Erzeugen der Dictionary-Information verwendet werden, bildliche Darstellungen von Überholverbotszeichen aus dem Vereinigten Königreich (UK) und dem europäischen Kontinent umfassen.

6. Vorrichtung nach einem der Ansprüche 1-5, wobei die Verarbeitungseinheit zum Hinzufügen des Bilds zu den bildlichen Darstellungen ausgebildet ist.

7. Fahrzeug (100), das zum Bestimmen von Fahrzeugnavigationsinformation ausgebildet ist, wobei es aufweist:

- mindestens eine Datenerfassungseinheit (110); und
- eine Vorrichtung (10) zum Bestimmen des Vorhandenseins eines Verkehrszeichens nach einem der vorhergehenden Ansprüche; und

wobei die mindestens eine Bilderfassungseinheit eine Kamera (112) umfasst, die zum Erfassen des Bilds ausgebildet ist.

8. Verfahren (200) zum Bestimmen von Fahrzeugnavigationsinformation, das aufweist:

a) Bereitstellen (210) eines Bilds, das eine Szene außerhalb eines Fahrzeugs betrifft;
c) Bereitstellen (220) eines Klassifikators, der mit Dictionary-Information trainiert ist, wobei die Dictionary-Information bildliche Darstellungen von Überholverbotszeichen aus mindestens einem Land, in dem auf der linken Straßenseite gefahren wird, und mindestens einem Land, in dem auf der rechten Straßenseite gefahren wird, umfasst;
d) Bestimmen (230), ob Verkehr an einem Ort, an dem das Bild erfasst wurde, auf der rechten oder linken Seite der Straßen in Fahrtrichtung fährt, durch Anwenden einer Bildverarbeitung des Bilds; wobei die Bildverarbeitung umfasst:

- Detektieren einer kreisrunden Form oder im Wesentlichen kreisrunden Form, die auf ein kreisrundes Verkehrszeichen hinweist, das unter einem Winkel gesehen wird;
- Klassifizieren der Bilddaten innerhalb der Begrenzung der kreisrunden Form als ein Überholverbotszeichen unter Verwendung des trainierten Klassifikators;
- Extrahieren eines schwarzen oder grauen Piktogramms und eines roten Piktogramms aus dem detektierten Überholverbotszeichen in dem Bild;
- Bestimmen, dass der Verkehr auf der rechten Seite fährt, wenn sich das rote Piktogramm links befindet, und dass der Verkehr auf der linken Seite fährt, wenn sich das rote Piktogramm rechts befindet;

e) Ausgeben (240) von Fahrtinformation, die betrifft, ob Verkehr rechts oder links fährt.

9. Computerprogrammelement zum Steuern einer Vorrichtung nach einem der Ansprüche 1 bis 6 und/oder eines Systems nach Anspruch 7, das bei Ausführung durch einen Prozessor zum Durchführen des Verfahrens nach Anspruch 8 ausgebildet ist.

**Revendications**

1. Dispositif (10) permettant de déterminer des informations de navigation de véhicule, comprenant :

- une unité d'entrée (20),
- une unité de traitement (30), et
- une unité de sortie (40),

dans lequel l'unité d'entrée est configurée pour fournir à l'unité de traitement une image se rapportant à une scène externe à un véhicule,
dans lequel l'unité d'entrée est configurée pour fournir à l'unité de traitement un dispositif de classement conformé avec des informations de lexique, les informations de lexique comprenant des images concernant des panneaux d'interdiction de dépasser provenant d'au moins un pays où l'on circule à gauche de la route et d'au moins un pays où l'on circule à droite de la route, dans lequel l'unité de traitement est configurée pour déterminer si la circulation, dans un lieu où l'image a été acquise, est située sur la droite ou la gauche de la route dans la direction de déplacement en appliquant un traitement sur l'image,
dans lequel l'unité de traitement est configurée pour :

- détecter une forme circulaire ou pratiquement circulaire indicative d'un panneau routier circulaire visualisé depuis un angle,
- classer les données d'image situées à l'intérieur des limites de ladite forme circulaire comme étant un panneau d'interdiction de dépasser en utilisant le dispositif de classement conformé,
- extraire un pictogramme noir ou gris et un pictogramme rouge du panneau d'interdiction de dépasser détecté dans l'image,
- déterminer que la circulation se situe sur le côté droit si le pictogramme rouge se trouve sur la gauche et que la circulation se situe sur le côté gauche si le pictogramme rouge se trouve sur la droite, et

dans lequel l'unité de sortie est configurée pour délivrer des informations de conduite se rapportant au fait que la circulation se situe sur le côté droit ou gauche.

2. Dispositif selon la revendication 1, dans lequel l'extraction d'un pictogramme noir ou gris et d'un pictogramme rouge comprend une technique de caractérisation d'histogramme.

3. Dispositif selon l'une quelconque des revendications 1 ou 2, dans lequel l'extraction d'un pictogramme noir ou gris et d'un pictogramme rouge comprend une détection de bord.

4. Dispositif selon la revendication 3, dans lequel la détection de bord comprend la détermination d'un profil horizontal à l'intérieur des données d'image.

5. Dispositif selon la revendication 1, dans lequel les images utilisées pour générer les informations de lexique comprennent des images de panneaux d'interdiction de dépasser provenant du Royaume-Uni et du continent européen.

6. Dispositif selon l'une quelconque des revendications 1 à 5, dans lequel l'unité de traitement est configurée pour ajouter l'image aux images.

7. Véhicule (100) configuré pour déterminer les informations de navigation de véhicule, comprenant :

- au moins une unité d'acquisition de données (110), et
- un dispositif (10) permettant de déterminer la présence d'un panneau routier conforme à l'une quelconque des revendications précédentes, et

dans lequel la ou les unités d'acquisition d'image comprennent un appareil de prise de vues (112) configuré pour acquérir l'image.

8. Procédé (200) permettant de déterminer les informations de navigation de véhicule, comprenant :

a) la fourniture (210) d'une image se rapportant à une scène externe à un véhicule,
c) la fourniture (220) d'un dispositif de classement conformé avec des informations de lexique, les informations de lexique comprenant des images concernant des panneaux d'interdiction de dépasser provenant d'au moins un pays où l'on circule à gauche de la route et d'au moins un pays où l'on circule à droite de la route,
d) la détermination (230) de ce que la circulation, dans un lieu où l'image a été acquise, est située sur la droite ou la gauche de la route dans la direction de déplacement en appliquant un traitement sur l'image,
dans lequel le traitement d'image comprend :

- la détection d'une forme circulaire ou pratiquement circulaire indicative d'un panneau routier circulaire visualisé depuis un angle,
- le classement des données d'image situées à l'intérieur des limites de ladite forme circulaire comme étant un panneau d'interdiction de dépasser en utilisant le dispositif de classement conformé,
- l'extraction d'un pictogramme noir ou gris et d'un pictogramme rouge du panneau d'interdiction de dépasser détecté dans l'image,
- la détermination de ce que la circulation se situe sur le côté droit si le pictogramme rouge se trouve sur la gauche et que la circulation se situe sur le côté gauche si le pictogramme rouge se trouve sur la droite,

e) la délivrance en sortie (240) des informations de conduite se rapportant au fait que la circulation se situe sur le côté droit ou gauche.

**9.** Élément de programme informatique permettant de commander un dispositif conforme à l'une quelconque des revendications 1 à 6 et/ou un système conforme à la revendication 7, qui, lorsqu'il est exécuté par un processeur, et configuré pour exécuter le procédé décrit dans la revendication 8.

Fig. 1

Fig. 2

Fig. 3

ADAS Camera

Circle Detection

Main
Sign
Classifier

Other sign
classes

Existing

No overtaking signs

Red
Pictogram

Gray
Pictogram

Pictogram
Extraction

Left
Pictogram

Right
Pictogram

Red Vs Gray
classifier
dictionary

Histogram feature extraction

Linear Classifier

Red Vs Classifier Network

Addition

Gray
0.8

Red
0.2

Red
0.8

Gray
0.2

Logic
Analysis

Left Hand
Drive Traffic

Right Hand
Drive Traffic

Fig. 4

Germany
(Right Hand Drive)

United Kingdom
(Left Hand Drive)

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102010027364 A1

- DE 102012221652 A1

**Non-patent literature cited in the description**

- Vision-Based Traffic Sign Detection and Analysis for Intelligent Driver Assistance Systems: Perspectives and Survey. **MOGELMOSE et al.** IEEE TRANSACTIONS ON INTELLIGENT TRANSPORTATION SYSTEMS. IEEE, 2012, vol. 13, 1484-1497